## Europäisches Patentamt

## European Patent Office

## Office européen des brevets

(19)

(11) Veröffentlichungsnummer: **0 289 757**
**B1**

(12) **EUROPÄISCHE PATENTSCHRIFT**

(45) Veröffentlichungstag der Patentschrift:
23.05.90

(51) Int. Cl.⁵: **C05G 3/08**

(21) Anmeldenummer: **88104269.1**

(22) Anmeldetag: **17.03.88**

(54) **Nitrifikationshemmendes Mittel.**

(30) Priorität: **02.05.87 DE 3714729**

(43) Veröffentlichungstag der Anmeldung:
**09.11.88 Patentblatt 88/45**

(45) Bekanntmachung des Hinweises auf die Patenterteilung:
**23.05.90 Patentblatt 90/21**

(84) Benannte Vertragsstaaten:
**AT BE CH DE ES FR GB IT LI SE**

(56) Entgegenhaltungen:
EP-A- 0 022 536
US-A- 3 544 295

CHEMICAL ABSTRACTS, Band 103, Nr. 21,
November 1985, Seite 617, Zusammenfassung
Nr. 177558j, Columbus, Ohio, US; & DD-A-222 471 (VEB
STICKSTOFFWERK PIESTERITZ) 15-05-1985
CHEMICAL ABSTRACTS, Band 102, Nr. 19, Mai 1985,
Seite 547, Zusammenfassung Nr. 165902h, Columbus,
Ohio, US; & SU-A-1 137 096 (V.G. VODOP'YANOV et
al.) 30-01-1985
CHEMICAL ABSTRACTS, Band 105, Nr. 7, 1986,
Seite 557, Zusammenfassung Nr. 59944a, Columbus,
Ohio, US; H.H. JANZEN et al.: "Influence of thiosulfate
on nitrification of ammonium in soil", & SOIL SCI. SOC.
AM. J. 1986, 50(3), 803-6

(73) Patentinhaber: **SKW Trostberg Aktiengesellschaft,
Dr.-Albert-Frank-Strasse 32 Postfach 1150/1160,
D-8223 Trostberg(DE)**

(72) Erfinder: **Solansky, Svatopluk, Dr. Dipl.-Landwirt,
Bergstrasse 4, D-8223 Trostberg(DE)**
Erfinder: **Goll, Werner, Dr. Dipl.-Chem.,
Frank-Caro-Strasse 51, D-8268 Garching 2(DE)**
Erfinder: **Youngman, Richard, Dr., Ackerweg 4,
D-8224 Chieming-Hart(DE)**

(74) Vertreter: **Huber, Bernhard, Dipl.-Chem. et al,
Möhlstrasse 22 Postfach 860 820,
D-8000 München 86(DE)**

**Beschreibung**

Die vorliegende Erfindung betrifft ein Mittel zur Hemmung der Nitrifikation von Ammoniumstickstoff, insbesondere in mineralischen und organischen Düngemitteln im Boden.

Es ist bekannt, daß Ammoniumstickstoff im Boden relativ rasch durch Bakterien zu Nitratstickstoff umgewandelt wird. Dieser Nitrifikationsvorgang wird maßgeblich durch Temperatur, Bodenfeuchte, pH-Wert sowie biologische Aktivität des Bodens beeinflußt.

Da der Nitratstickstoff im Gegensatz zum Ammoniumstickstoff nicht an Bodenteilchen festgehalten wird, kann er sehr leicht bei Niederschlägen, vor allem auf leichten, durchlässigen Böden, ausgewaschen werden. Auf diese Weise geht der Stickstoff als wichtiger Nährstoff für die Pflanze verloren. Darüber hinaus kann es zu einer Nitratanreicherung im Grund- bzw. Trinkwasser kommen, was unter Umständen zu gesundheitlichen Problemen führen kann.

Neben den Auswaschungsverlusten treten auch erhebliche gasförmige Stickstoffverluste durch Denitrifikation des Nitratstickstoffs auf.

Durch die Zugabe von nitrifikationshemmenden Mitteln können diese Stickstoffverluste verringert und die Ausnutzung von stickstoffhaltigen Düngemitteln entscheidend verbessert werden.

So sind für diesen Zweck eine Reihe von nitrifikationshemmenden Mitteln, beispielsweise auf Basis von Pyridin-, Anilin-, Chlor oder Schwefelderivaten entwickelt worden.

Diese Verbindungen weisen in der Praxis jedoch verschiedene Nachteile wie z.B. hohe Flüchtigkeit auf, die eine aufwendige Einbringung in den Boden erforderlich macht. Außerdem sind diese Verbindungen in der Regel toxisch und/oder hinterlassen toxische Rückstände im Boden. Aus ökologischen Sicht sind daher nur solche, bekannten nitrifikationshemmenden Substanzen für den praktischen Einsatz zu befürworten, die weder toxisch sind noch Rückstandsprobleme aufwerfen. Hierzu gehören vor allem stickstoffhaltige Nitrifikationshemmer, wie z.B. Dicyandiamid, Guanylthioharnstoff oder Ammoniumthiosulfat, welche im Boden vollständig zu pflanzenverfügbarem Stickstoff abgebaut werden. Nachteilig bei diesen Verbindungen, beispielsweise im Vergleich zu Pyridinderivaten, ist die geringere Wirksamkeit bzw. Wirkungsdauer. Sie müssen daher in größeren Mengen eingesetzt werden, wodurch nicht nur finanzielle, sondern auch eine Reihe von anwendungstechnischen Problemen entstehen.

Der vorliegenden Erfindung lag daher die Aufgabe zugrunde, ein nitrifikationshemmendes Mittel zu entwickeln, welches die genannten Nachteile des Standes der Technik nicht aufweist, sondern eine ausgezeichnete Wirksamkeit und gute Anwendungsmöglichkeiten besitzt, sowie in toxikologischer und rückstandsmäßiger Hinsicht umproblematisch ist.

Diese Aufgabe wurde erfindungsgemäß gelöst durch ein nitrifikationshemmendes Mittel, welches aus

a) Dicyandiamid und
b) Guanylthioharnstoff und/oder Ammoniumthiosulfat sowie gegebenenfalls
c) Ammoniumphosphat besteht.

Es hat sich nämlich überraschenderweise gezeigt, daß das erfindungsgemäße Mittel eine wesentlich intensivere und länger anhaltende Hemmung der Nitrifikation bewirkt als eine Addition der Hemmwirkungen der Einzelkomponenten a) und b) ergibt.

Dieser synergistische Effekt, der auch bei der Kombination mehrerer Einzelkomponenten stark ausgeprägt ist, war keinesfalls vorhersehbar.

Das nitrifikationshemmende Mittel entsprechend der vorliegenden Erfindung besteht aus der Komponente a), nämlich Dicyandiamid, und mindestens einer weiteren Komponente b), ausgewählt aus der Gruppe Guanylthioharnstoff, Ammoniumthiosulfat und Ammoniumphosphat, so daß es aus zwei bis vier Einzelkomponenten besteht.

Das Verhältnis der Einzelkomponenten untereinander kann in weiten Grenzen variiert werden, wobei der synergistische Effekt natürlich mehr oder weniger stark ausgeprägt ist.

Bei den Zweikomponentensystemen sind Mischungen, bestehend aus 20 bis 80 Gew.-% Dicyandiamid sowie 20 bis 80 Gew.-% Guanylthioharnstoff als bevorzugt anzusehen.

Als Dreikomponentensysteme haben sich Mischungen, welche aus

20 bis 70 Gew.-% Dicyandiamid
20 bis 70 Gew.-% Ammoniumthiosulfat
10 bis 60 Gew.-% Ammoniumphosphat

bestehen, besonders bewährt.

Schließlich kann das erfindungsgemäße Mittel als Vierkomponentensystem eingesetzt werden, wobei es vorzugsweise aus

20 bis 60 Gew.-% Dicyandiamid
20 bis 60 Gew.-% Guanylthioharnstoff
10 bis 50 Gew.-% Ammoniumthiosulfat
10 bis 50 Gew.-% Ammoniumphosphat

besteht.

Unter Ammoniumphosphat im Rahmen der vorliegenden Erfindung sind ammoniumhaltige Phosphatverbindungen zu verstehen, insbesondere Ammoniumdihydrogenphosphat, Diammoniumhydrogenphosphat sowie Ammoniumpolyphosphat.

Das erfindungsgemäße nitrifikationshemmende Mittel kann sowohl allein als auch in Kombination mit stickstoffhaltigen Düngemitteln ausgebracht werden.

Wird es ohne Düngemittel angewandt, so empfiehlt sich eine Aufwandmenge von 0,1 bis 300 kg/ha, vorzugsweise 1 bis 60 kg/ha, wobei die Ausbringung entweder vor, gleichzeitig mit oder nach der Düngung erfolgen kann.

Wird das erfindungsgemäße Mittel hingegen in Kombination mit dem stickstoffhaltigen Düngemittel eingesetzt, dessen Nitrifikation es hemmen soll, so wird es zweckmäßig in einer Menge von 0,1 bis 30 Gew.-%, vorzugsweise 1 bis 15 Gew.-% bezogen auf das Düngemittel, verwendet.

Als stickstoffhaltige Düngemittel kommen sowohl mineralische als auch organische Düngemittel in Frage, wobei bei den mineralischen Stickstoffdüngemitteln alle Ammoniumsalze wie z.B. Ammoniumnitrat oder Ammoniumsulfat sowie Ammoniak oder Harnstoff sowohl in Einzel- als auch in Mehrnährstoffdüngemitteln eingesetzt werden können. Unter den organischen Düngemitteln sind bei spielsweise Gülle, Jauche, Klärschlamm und ähnliches zu verstehen.

Die Verwendung des erfindungsgemäßen Mittels ist aufgrund seiner guten Anwendungsmöglichkeiten unproblematisch. Es ist gleichermaßen gut für Feststoff- wie auch für Flüssigdünger geeignet.

Zur Herstellung von Feststoffdüngern wird das nitrifikationshemmende Mittel der Erfindung den Düngemitteln mit den üblichen Vorrichtungen zudosiert und mit diesen vermischt, bzw. gemeinsam granuliert, geprillt oder verpreßt. Auch bei der Zumischung des erfindungsgemäßen Mittels zu Flüssigdüngern (in Form von Lösungen oder Suspensionen) treten in der Regel keine Probleme auf. Die Zumischung kann während der Herstellung der Düngemittellösung bzw. -suspension wie auch nachträglich erfolgen. Darüber hinaus eignet sich das erfindungsgemäße Mittel hervorragend zur Herstellung einer wäßrigen Suspension, welche mit den üblichen Pflanzenmittelspritzen ausgebracht werden kann. Hierbei kann die Anwendung mit der Ausbringung von Pflanzenschutz- und Schädlingsbekämpfungsmitteln kombiniert werden.

Das nitrifikationshemmende Mittel entsprechend der vorliegenden Erfindung ermöglicht es, für gleiche Wirksamkeit bzw. Wirkungsdauer den Wirkstoffaufwand gegenüber den Einzelkomponenten beträchtlich zu senken. Da alle Komponenten eine geringe Toxizität besitzen und im Boden keine bedenklichen Rückstände hinterlassen, eignet sich das vorgeschlagene Mittel in hervorragender Weise für den praktischen Einsatz.

Die nachfolgenden Beispiele sollen die Erfindung näher erläutern, ohne sie jedoch darauf zu beschränken.

Beispiel 1

In einem Bebrütungsversuch wurden 100 g Boden (sandiger Lehm, pH 7,2) mit 20 mg Harnstoff-Stickstoff und folgenden Wirkstoffmengen vermischt:

Versuch 1 = 1,5 mg Dicyandiamid (DCD)
Versuch 2 = 1,5 mg Guanylthioharnstoff (GTH)
Versuch 3 = 1,5 mg DCD + 1,5 mg GTH

Als Kontrolle diente die gleiche Harnstoffgabe zum Boden, jedoch ohne Wirkstoff. Der Boden wurde in 0,5 l Plastikflaschen bei 60 % Wasserkapazität und 20°C bebrütet. Nach einer Bebrütungsdauer von 8, 12 und 16 Wochen wurde der Gehalt an Nitratstickstoff im Boden bestimmt und hieraus die Nitrifikationshemmung in % gemäß folgender Formel berechnet:

$$\text{Nitrifikationshemmung (\%)} = \frac{a - b}{a - c} \times 100$$

a = Nitrat-N-Gehalt der Kontrolle
b = Nitrat-N-Gehalt des Versuchs
c = Nitrat-N-Gehalt des Bodens

**Ergebnisse:**

|  | Hemmung in % | | |
|---|---|---|---|
|  | 8 Wochen | 12 Wochen | 16 Wochen |
| Versuch 1 : 1,5 mg DCD = | 21 | 5 | 0 |
| Versuch 2 : 1,5 mg GTH = | 60 | 45 | 17 |
| Addition Vers. 1 + Vers. 2 = | 81 | 50 | 17 |
| Versuch 3 : 1,5 mg DCD + 1,5 mg GTH = | 88 | 72 | 51 |

Die gemeinsame Applikation von Dicyandiamid und Guanylthioharnstoff wies eine um 7, 22 bzw. 34 Prozentpunkte höhere Nitrifikationshemmung als die Addition der Hemmung der Einzelkomponenten auf.

<u>Beispiel 2</u>

Der Versuch erfolgte wie in Beispiel 1 beschrieben, jedoch mit Ammoniumsulfat als Stickstoffquelle.

**Ergebnisse:**

|  | Hemmung in % | | |
|---|---|---|---|
|  | 8 Wochen | 12 Wochen | 16 Wochen |
| Versuch 1 : 1,5 mg DCD = | 23 | 10 | 0 |
| Versuch 2 : 1,5 mg GTH = | 50 | 38 | 13 |
| Addition Vers. 1 + Vers. 2 = | 73 | 48 | 13 |
| Versuch 3 : 1,5 mg DCD + 1,5 mg GTH = | 82 | 66 | 44 |

Die gemeinsame Applikation von Dicyandiamid und Guanylthioharnstoff wies eine um 9, 18, bzw. 31 Prozentpunkte höhere Nitrifikationshemmung als die Addition der Hemmung der Einzelkomponenten auf.

<u>Beispiel 3</u>

Es wurden mehrere Versuche wie in Beispiel 2 beschrieben durchgeführt, jedoch mit verschiedenen Kombinationen aus Dicyandiamid und Guanylthioharnstoff. Nach einer Bebrütungsdauer von 12 Wochen übertrafen die Wirkstoffkombinationen die additive Hemmung der Einzelkomponenten um folgende Prozentpunkte:

0,5 mg DCD + 2,5 mg GTH = 17 %
1,0 mg DCD + 2,0 mg GTH = 21 %
1,5 mg DCD + 1,5 mg GTH = 22 %
2,0 mg DCD + 1,0 mg GTH = 25 %
2,5 mg DCD + 0,5 mg GTH = 20 %

<u>Beispiel 4</u>

Der Versuch erfolgte wie im Beispiel 1 beschrieben, jedoch mit Ammoniumthiosulfat (ATS) als zweite Komponente der Wirkstoffkombination. Die Betrütungsdauer betrug 4, 6 und 8 Wochen.

Ergebnisse:

| | Hemmung in % | | |
| --- | --- | --- | --- |
| | 4 Wochen | 6 Wochen | 8 Wochen |
| Versuch 1 : 1,5 mg DCD = | 50 | 36 | 21 |
| Versuch 2 : 1,5 mg ATS = | 12 | 6 | 2 |
| Addition Vers. 1 + Vers. 2 = | 62 | 42 | 23 |
| Versuch 3 : 1,5 mg DCD + 1,5 mg ATS = | 65 | 50 | 38 |

Die gemeinsame Applikation von Dicyandiamid und Ammoniumthiosulfat wies eine um 3, 8 bzw. 15 Prozentpunkte höhere Nitrifikationshemmung als die Addition der Hemmung der Einzelkomponenten auf.

Beispiel 5

Der Versuch erfolgte wie im Beispiel 1 beschrieben, jedoch mit einer Dreifachkombination, bestehend aus Dicyandiamid (DCD), Guanylthioharnstoff (GTH) und Ammoniumthiosulfat (ATS). Die Bebrütungsdauer betrug 8, 12 bzw. 16 Wochen.

Ergebnisse:

| | Hemmung in % | | |
| --- | --- | --- | --- |
| | 8 Wochen | 12 Wochen | 16 Wochen |
| Versuch 1 : 1,0 mg DCD = | 15 | 2 | 0 |
| Versuch 2 : 1,0 mg GTH = | 41 | 23 | 8 |
| Versuch 3 : 1,0 mg ATS = | 2 | 0 | 0 |
| Addition Vers. 1 + Vers. 2 + Vers. 3 = | 58 | 25 | 8 |
| Versuch 4 : 1,0 mg DCD + 1,0 mg GTH + 1,0 mg ATS = | 77 | 60 | 48 |

Die Dreifachkombination aus Dicyandiamid, Guanylthioharnstoff und Ammoniumthiosulfat wies eine um 19, 35 bzw. 40 Prozentpunkte höhere Nitrifikationshemmung als die Addition der Hemmung der Einzelkomponenten auf.

Beispiel 6

Der Versuch erfolgte wie im Beispiel 1 beschrieben, wobei verschiedenen Wirkstoffkombinationen Ammoniumpolyphosphat (APP) in Form einer handelsüblichen NP-Lösung (10:34) zugesetzt wurden. Die Bebrütungsdauer betrug 4 Wochen bei den Versuchen 1 und 2 und 12 Wochen bei den Versuchen 3 und 4.

Ergebnisse:

```
Versuch 1:

1,5 mg DCD        }
                  }   ohne APP = 66 % Hemmung
1,5 mg ATS        }
```

Versuch 2:

1,5 mg DCD

1,5 mg ATS
} mit APP = 75 % Hemmung

Versuch 3:

1,0 mg DCD

1,0 mg GTH

1,0 mg ATS
} ohne APP = 60 % Hemmung

Versuch 4:

1,0 mg DCD

1,0 mg GTH

1,0 mg ATS
} mit APP = 73 % Hemmung

Der Zusatz von Ammoniumpolyphosphat steigerte die Hemmung der Nitrifikation um 9 bzw. 13 Prozentpunkte.

Beispiel 7

In einem Gefäßversuch (7 kg Boden in einem Mitscherlichgefäß) wurde der Einfluß von Wirkstoffkombinationen bestehend aus Dicyandiamid (DCD) und Guanylthioharnstoff (GTH) auf die Nitratauswaschung nach Düngung mit Harnstoff untersucht. Innerhalb der ersten drei Wochen nach der Düngung wurden folgende Anteile (%) des gedüngten Harnstoffs ausgewaschen:

| | |
|---|---|
| Harnstoff ohne Wirkstoff | = 48,2% |
| Harnstoff mit 10% DCD-N | = 19,9% |
| Harnstoff mit 10% GTH-N | = 14,2% |
| Harnstoff mit 5% DCD-N + 5% GTH-N | = 10,3% |

Beispiel 8

In einem Feldversuch wurde die Wirkung der Wirkstoffkombination bestehend aus Dicyandiamid (DCD), Guanylthioharnstoff (GTH) und Ammoniumthiosulfat (ATS) auf den Ertrag von Zuckerrüben geprüft. Die Wirkstoffkombination wurde zusammen mit Ammonnitrat-Harnstoff-Lösung (AHL) in einer Menge von 200 kg/ha N (inkl. Wirkstoff-N) vor der Saat der Zuckerrüben ausgebracht. Es wurden folgende Erträge erzielt:

| Düngung | Ertrag | |
|---|---|---|
| | dt/ha | % |
| AHL ohne Wirkstoff | = 714 | 100,0 |
| AHL mit 10% DCD-N | = 730 | 102,3 |
| AHL mit 6% DCD-N + 4% ATS-N | = 751 | 105,2 |
| AHL mit 4% DCD-N + 2% GTH-N + 4% ATS-N | = 766 | 107,3 |

**Patentansprüche**

Nitrifikationshemmendes Mittel, dadurch gekennzeichnet, daß es aus
a) Dicyandiamid und
b) Guanylthioharnstoff und/oder Ammoniumthiosulfat sowie gegebenenfalls
c) Ammoniumphosphat besteht.

2. Mittel nach Anspruch 1, **dadurch gekennzeichnet,** daß es aus 20 bis 80 Gew.-% Dicyandiamid und 20 bis 80 Gew.-% Guanylthioharnstoff besteht.

3. Mittel nach Anspruch 1, **dadurch gekennzeichnet,** daß es aus
20 bis 70 Gew.-% Dicyandiamid
20 bis 70 Gew.-% Ammoniumthiosulfat
10 bis 60 Gew.-% Ammoniumphosphat
besteht.

4. Mittel nach Anspruch 1, **dadurch gekennzeichnet,** daß es aus
20 bis 60 Gew.-% Dicyandiamid
20 bis 60 Gew.-% Guanylthioharnstoff
10 bis 50 Gew.-% Ammoniumthiosulfat
10 bis 50 Gew.-% Ammoniumphosphat
besteht.

5. Mittel nach einem der Ansprüche 1 bis 4, **dadurch gekennzeichnet,** daß es als Ammoniumphosphat Ammoniumpolyphosphat enthält.

6. Mittel nach einem der Ansprüche 1 bis 5, **dadurch gekennzeichnet,** daß es in Kombination mit einem stickstoffhaltigen Düngemittel vorliegt.

7. Verfahren zur Hemmung der Nitrifikation mit einem Mittel nach einem der Ansprüche 1 bis 6, **dadurch gekennzeichnet,** daß man es in einer Menge von 0,1 bis 300 kg/ha, vorzugsweise 1 bis 60 kg/ha, ausbringt.

8. Verfahren nach Anspruch 7, **dadurch gekennzeichnet,** daß man das Mittel zusammen mit einem stickstoffhaltigen Düngemittel in einer Menge von 0,1 bis 30 Gew.-%, vorzugsweise 1 bis 15 Gew.-% bezogen auf das Düngemittel, einsetzt.

**Claims**

1. Nitrification-inhibiting agent, characterised in that it consists of
a) dicyandiamide and
b) guanylthiourea and/or ammonium thiosulphate, as well as possibly
c) ammonium phosphate.

2. Agent according to claim 1, characterised in that it consists of 20 to 80 wt.% of dicyandiamide and 20 to 80 wt.% of guanylthiourea.

3. Agent according to claim 1, characterised in that it consists of
20 to 70 wt.% of dicyandiamide
20 to 70 wt.% of ammonium thiosulphate
10 to 60 wt.% of ammonium phosphate.

4. Agent according to claim 1, characterised in that it consists of
20 to 60 wt.% of dicyandiamide
20 to 60 wt.% of guanylthiourea
10 to 50 wt.% of ammonium thiosulphate
10 to 50 wt.% of ammonium phosphate.

5. Agent according to one of claims 1 to 4, characterised in that it contains ammonium polyphosphate as ammonium phosphate.

6. Agent according to one of claims 1 to 5, characterised in that it is present in combination with a nitrogen-containing fertilizer.

7. Process for the inhibition of the nitrification with an agent according to one of claims 1 to 6, characterised in that one applies it in an amount of 0.1 to 300 kg/ha, preferably of 1 to 60 kg/ha.

8. Process according to claim 7, characterised in that one uses the agent, together with a nitrogen-containing fertilizer, in an amount of 0.1 to 30 wt.%, preferably of 1 to 15 wt.%, referred to the fertilizer.

**Revendications**

1. Agent inhibant la nitrification, caractérisé en ce qu'il se compose
a) de dicyandiamide et
b) de guanylthiourée et/ou de thiosulfate d'ammonium, ainsi que le cas échéant de
c) phosphate d'ammonium.

2. Agent suivant la revendication 1, caractérisé en ce qu'il se compose de 20 à 80% en poids de dicyandiamide et de 20 à 80% en poids de guanylthiourée.

3. Agent suivant la revendication 1, caractérisé en qu'il se compose de
20 à 70% en poids de dicyandiamide
20 à 70% en poids de thiosulfate d'ammonium
10 à 60% en poids de phosphate d'ammonium.

4. Agent suivant la revendication 1, caractérisé en ce qu'il se compose de
20 à 60% en poids de dicyandiamide
20 à 60% en poids de guanylthiourée
10 à 50% en poids de thiosulfate d'ammonium
10 à 50% en poids de phosphate d'ammonium.

5. Agent suivant l'une des revendications 1 à 4, caractérisé en ce qu'il contient comme phosphate d'ammonium du polyphosphate d'ammonium.

6. Agent suivant l'une des revendications 1 à 5, caractérisé en ce qu'il est présent en association avec un engrais azoté.

7. Procédé d'inhibition de la nitrification avec un agent suivant l'une des revendications 1 à 6, caractérisé en ce qu'on l'épand dans une quantité de 0,1 à 300 kg/ha, de préférence de 1 à 60 kg/ha.

8. Procédé suivant la revendication 7, caractérisé en ce qu'on utilise l'agent en même temps qu'un engrais azoté dans une quantité de 0,1 à 30% en poids, de préférence de 1 à 15% en poids par rapport à l'engrais.